# EUROPEAN PATENT APPLICATION

(11) **EP 4 699 928 A1**
(43) Date of publication of application: **25.02.2026**
(21) Application number: 24875774.2
(22) Date of filing: 28.06.2024
(51) Int. Cl.: B63H 23/36, B63H 5/16, B63H 23/32, B63H 23/34

(54) **CYLINDRICAL MEMBER, METHOD FOR ASSEMBLING CYLINDRICAL MEMBER, METHOD FOR DISASSEMBLING CYLINDRICAL MEMBER, LINER, STERN PIPE SEALING SYSTEM, AND SHIP**

(71) Applicant: Wartsila Japan Ltd., Kobe-shi, Hyogo 650-0045 (JP)
(72) Inventor: FUJII, Masahiko, Toyama-shi, Toyama 939-3551 (JP); MIHARA, Masaki, Toyama-shi, Toyama 939-3551 (JP)
(74) Representative: TBK
(86) International application number: PCT/JP2024/023549
(87) International publication number: WO 2026/004102

(57) **Abstract**

A liner as an example of a tubular member includes a split-type tubular body structured by combining, in a circumferential direction of a propeller shaft, two components that are split along an axial direction of the propeller shaft; a pair of grooves provided, at the two components, along the axial direction on two connecting surfaces which face each other in the circumferential direction and which are in contact with each other, and forming a through hole, with a direction of an axis of the through hole being the axial direction, by aligning openings thereof at the connecting surfaces when the two connecting surfaces come into contact; and at least one bar member formed so as to extend along the axial direction and joining the two components by being inserted into the through hole. Cross-sectional shapes, in a cross section orthogonal to the axial direction, of the grooves are formed such that widths at a bottom surface side are greater than widths of the openings at the connecting surfaces.

## Description

### TECHNICAL FIELD

The present disclosures relate to a tubular member, an assembling method of the tubular member, a disassembling method of the tubular member, a liner, a stern tube sealing system, and a vessel.

### BACKGROUND ART

There is a tubular member like a liner fitted onto a periphery of a propeller shaft in, for instance, a stern tube sealing system (Patent Document 1 etc.).

### CITATION LIST

### PATENT DOCUMENT

Patent Document 1: Japanese Patent No. 6887584

### SUMMARY OF THE INVENTION

### TECHNICAL PROBLEM

When replacing the liner of the stern tube sealing system, since, in many cases, the liner is generally molded as a single-piece liner into a cylindrical tubular shape so as to be fitted onto the periphery of the propeller shaft, it is necessary to remove the other surrounding parts, which requires a lot of labor hours and effort. This problem also occurs in other tubular members having the same structure and installation condition as the liner.

An object of the present disclosures is to provide a tubular member capable of easy installation and removal, an assembling method of the tubular member, a disassembling method of the tubular member, a liner, a stern tube sealing system, and a vessel.

### SOLUTION TO PROBLEM

A tubular member according to an aspect of an embodiment of the present invention includes: a split-type tubular body structured by combining, in a circumferential direction, a plurality of components that are split along an axial direction; a pair of grooves provided, at adjacent two components of the plurality of components, along the axial direction on two connecting surfaces which face each other in the circumferential direction and which are in contact with each other, and forming a through hole by aligning openings thereof at the connecting surfaces when the two connecting surfaces come into contact, a direction of an axis of the through hole being the axial direction; and at least one bar member formed so as to extend along the axial direction and joining the two components by being inserted into the through hole. Also, cross-sectional shapes, in a cross section orthogonal to the axial direction, of the grooves are formed such that widths at a bottom surface side are greater than widths of the openings at the connecting surfaces.

### EFFECT OF INVENTION

According to the present disclosures, it is possible to provide the tubular member capable of easy installation and removal, the assembling method of the tubular member, the disassembling method of the tubular member, the liner, the stern tube sealing system, and the vessel.

### BRIEF DESCRIPTION OF DRAWINGS

Fig. 1 is a diagram illustrating an example of a schematic configuration of a stern tube sealing system according to an embodiment.
Fig. 2 is a perspective diagram of a liner according to the embodiment, when viewed from a stem side.
Fig. 3 is a perspective diagram of the liner according to the embodiment, when viewed from a stern side.
Fig. 4 is an exploded perspective diagram of the liner according to the embodiment, when viewed from the stern side.
Fig. 5 is a diagram illustrating a first step of an assembling procedure of the liner according to the embodiment.
Fig. 6 is a diagram illustrating a second step of the assembling procedure of the liner according to the embodiment.
Fig. 7 is a diagram illustrating a third step of the assembling procedure of the liner according to the embodiment.
Fig. 8 is a diagram illustrating a fourth step of the assembling procedure of the liner according to the embodiment.
Fig. 9 is a diagram illustrating an example of bar members according to a first modification.
Fig. 10 is a diagram illustrating an example of a third member of a bar member group according to a second modification.
Fig. 11 is a diagram illustrating an example of cross-sectional shapes of a through hole and a bar member according to a third modification.

### EMBODIMENTS FOR CARRYING OUT THE INVENTION

Embodiments will be described below with reference to the drawings. In order to facilitate the understanding of description, the same elements or components are denoted by the same reference symbols, and their redundant description may be omitted.

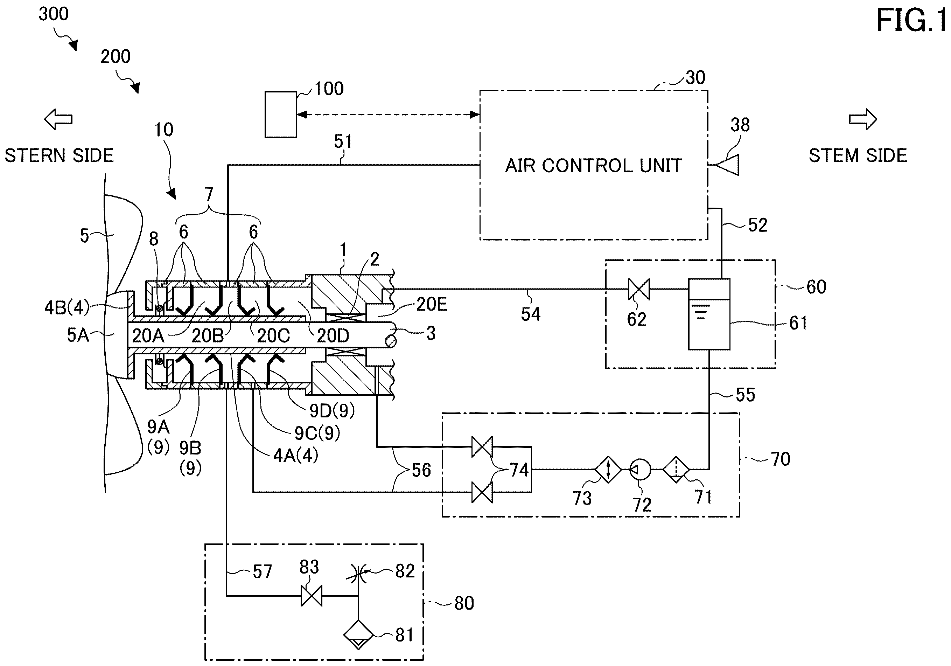

[Configuration of Stern Tube Sealing System 200] First, a stern tube sealing system 200 according to an embodiment will be described with reference to Fig. 1. Fig. 1 is a diagram illustrating an example of a schematic configuration of the stern tube sealing system 200 according to the embodiment.

As illustrated in Fig. 1, the stern tube sealing system 200 is installed in a vessel 300. The stern tube sealing system 200 includes a stern tube sealing device 10 around a propeller shaft 3 of the vessel 300, and also mainly includes an air control unit 30, an oil tank unit 60, an oil pump unit 70, and a drain recovery unit 80 in the vessel 300.

A stern tube 1 is provided with a bearing 2 inside the stern tube 1. The propeller shaft 3 is rotatably supported via the bearing 2, and a boss portion 5A of a propeller 5 is fixed to a stern-side tip of the propeller shaft 3. With this structure, as the propeller shaft 3 is driven and rotates, a driving force is transmitted to the propeller 5 through the boss portion 5A, causing the propeller 5 to turn.

A liner 4 is fitted onto a periphery of the propeller shaft 3. The liner 4 includes a tubular portion 4A, and a flange portion 4B. The tubular portion 4A is a cylindrical tubular-shaped portion that is in contact with an outer peripheral surface of the propeller shaft 3. An inner diameter of the tubular portion 4A is substantially the same as a diameter of the propeller shaft 3. The flange portion 4B is provided at a stern-side end portion of the tubular portion 4A. The flange portion 4B is a ring-shaped portion that is formed so as to extend outwards in a radial direction of the cylindrical tubular shape from the tubular portion 4A. The flange portion 4B is formed so as to face a stem-side end surface of the boss portion 5A of the propeller 5, and is connected and fixed to this end surface by a desired configuration such as a bolt fixing. With this, the liner 4 rotates integrally with the propeller shaft 3 and the propeller 5.

A tubular housing 7 concentrically enclosing the liner 4 is provided at an outer peripheral side of the liner 4. The housing 7 is fixed to the stern tube 1 with bolts. The stern tube sealing device 10 includes the housing 7, a packing ring 8, and four seal rings 9 (a first seal ring 9A, a second seal ring 9B, a third seal ring 9C, and a fourth seal ring 9D, in this order from the stern side) .

The housing 7 is formed by six split housings 6. Each split housing 6 is a cylindrical tubular member. The split housings 6 are fixed to the stern tube 1 with these split housings 6 fitted to each other and stacked in an axial direction of the propeller shaft 3. When each of the split housings 6 is fitted to the adjacent split housing 6, the seal ring 9 is held between the two split housings 6. The packing ring 8 is formed by an annular elastic member, and is fitted onto the liner 4. The packing ring 8 rotates together with the liner 4, and is in sliding-contact with the housing 7, thereby preventing foreign matter such as fishing nets and the like from entering the stern tube sealing device 10 and the stern tube 1.

Each of the seal rings 9 is provided so that a lip portion formed at a center-side end portion of each annular-shaped seal ring 9 is tightened against the liner 4 by coming into contact with an outer peripheral surface of the liner 4.

As an example of a molding material of the seal ring 9 that is an elastic member, it can be rubber materials and resin materials other than rubber. As the rubber material, it can be nitrile rubber (NBR), fluororubber (FR), natural rubber (NR), isoprene rubber (IR), butadiene rubber (BR), styrenebutadiene rubber (SBR), and the like. On the other hand, as the resin material other than rubber, it can be polytetrafluoroethylene (PTFE), polyetheretherketone (PEEK), fluororesin, polyamide (PA), and the like.

The first seal ring 9A and the second seal ring 9B are arranged with their lip portions facing the stern side, whereas the third seal ring 9C and the fourth seal ring 9D are arranged with their lip portions facing the stem side. Between the adjacent seal rings 9 and 9, an annular chamber is formed. That is, in an order from the stern side, a first air chamber 20A, a second air chamber 20B (each of which is an example of an air chamber), and a first oil chamber 20C (which is an example of an oil chamber) are formed. It is noted that in addition to the example shown in the drawing, the stern tube sealing device may have three seal rings 9, and in this case, a first seal ring from the stern side is arranged with its lip portion facing the stern side, whereas second and third seal rings are arranged with their lip portions facing the stem side.

An air supply passage 51 extending from the air control unit 30 communicates with the second air chamber 20B, and air provided from an air source 38 is supplied to the second air chamber 20B via the air control unit 30 through the air supply passage 51. Then, this supplied air causes the lip portions of the second seal ring 9B and the first seal ring 9A to lift up in turn, and air is discharged into seawater.

On the other hand, an oil supply passage 56 communicates with the first oil chamber 20C. Lubricating oil provided from the oil tank unit 60 is supplied to the oil pump unit 70 through an oil supply passage 55, and is supplied to the first oil chamber 20C from the oil pump unit 70 through the oil supply passage 56.

The oil supply passage 56 branches off at a secondary side of the oil pump unit 70. The lubricating oil is supplied to the first oil chamber 20C through one oil supply passage 56, and the lubricating oil is supplied to a third oil chamber 20E through the other oil supply passage 56. This lubricating oil allows good sliding of the bearing 2. The lubricating oil provided into the third oil chamber 20E is supplied to a second oil chamber 20D that is an annular chamber formed between the fourth seal ring 9D and the bearing 2 at the stern side of the bearing 2. An oil return passage 54 communicates with the third oil chamber 20E, and the lubricating oil is returned to the oil tank unit 60 through the oil return passage 54.

The air control unit 30 is connected to the second air chamber 20B through the air supply passage 51, and controls a pressure and a flow amount of the air (compressed air) supplied to the second air chamber 20B from the air source 38. Further, the air control unit 30 is connected, through a pressurization passage 52, to an oil tank 61 forming the oil tank unit 60, and controls a chamber pressure of the oil tank 61. The air control unit 30 is communicatively connected to a terminal device 100 such as a tablet by wired or wireless communication. Operations and parameter adjustments of the air control unit 30 are then performed by a management application installed in the terminal device 100. A detailed configuration of the air control unit 30 will be omitted. The air control unit 30 may be configured to be what is known as a mechanical type that does not connect to the terminal device 100 such as a tablet.

The oil tank unit 60 includes the oil tank 61, and a normally open valve 62 interposed at some midpoint of the oil return passage 54. By pressurizing the oil tank 61 by utilizing a pressure of the air provided to the oil tank 61 through the pressurization passage 52, oil pressures of the lubricating oil in the first to third oil chambers 20C to 20E are controlled so as to be always higher than a seawater pressure and air chamber pressures of the first and second air chambers 20A and 20B by a constant pressure. By the oil chamber pressure of the first oil chamber 20C being controlled so as to be always higher than the air chamber pressure of the second air chamber 20B by the constant pressure, and also by the lip portion of the third seal ring 9C facing the stem side, the lubricating oil in the first oil chamber 20C can always press the lip portion of the third seal ring 9C against the liner 4. Therefore, the lip portion of the third seal ring 9C is always in sliding-contact with the liner 4, thereby preventing the lubricating oil from leaking from the first oil chamber 20C to the second air chamber 20B.

The oil pump unit 70 includes, from an order from the oil tank 61 side, a filter 71, a circulation pump 72, a cooler 73, and normally open valves 74 at positions where the oil supply passage 56 extending from the cooler 73 branches off. The oil pump unit 70 supplies the lubricating oil, which is provided from the oil tank unit 60, to the first oil chamber 20C and the third oil chamber 20E, and is supplied to the second oil chamber 20D through a sliding surface between the liner 4 and the third seal ring 9C and between the liner 4 and the fourth seal ring 9D. Then, by returning the lubricating oil to the oil tank unit 60 from the third oil chamber 20E through the oil return passage 54, the lubricating oil is always circulated.

The drain recovery unit 80 includes a drain passage 57 communicating with the second air chamber 20B, and a normally open valve 83 interposed at a point somewhere along the drain passage 57, in order to discharge fluid such as the seawater and the lubricating oil when entering the second air chamber 20B. The drain recovery unit 80 further includes a drain discharge device 81 (an auto drain), and a needle valve 82, so as to collect the seawater and the lubricating oil in the drain discharge device 81 and automatically discharge the seawater and the lubricating oil when a certain amount of the seawater and the lubricating oil has accumulated.

Normally, only air is released from the second air chamber 20B by the drain recovery unit 80. However, in a case where the seawater and/or the lubricating oil leak into the second air chamber 20B, a pressurized air is slightly discharged through the normally open needle valve 82, and also the leaked-in seawater and/or the leaked-in lubricating oil are collected by the drain recovery unit 80.

### [Structure of Liner 4]

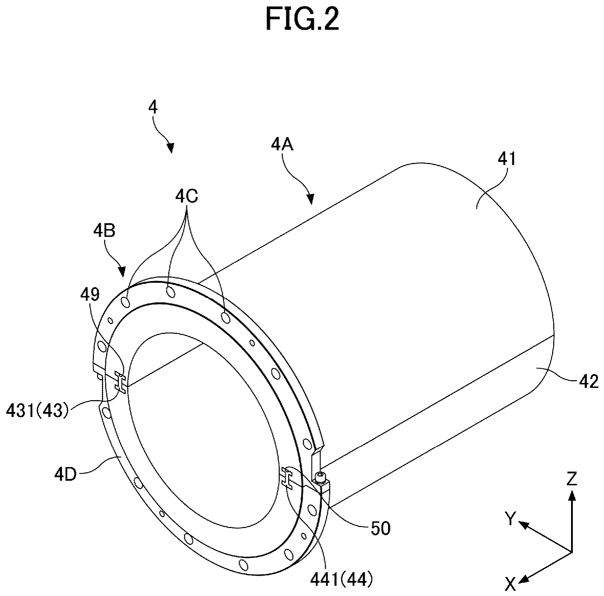

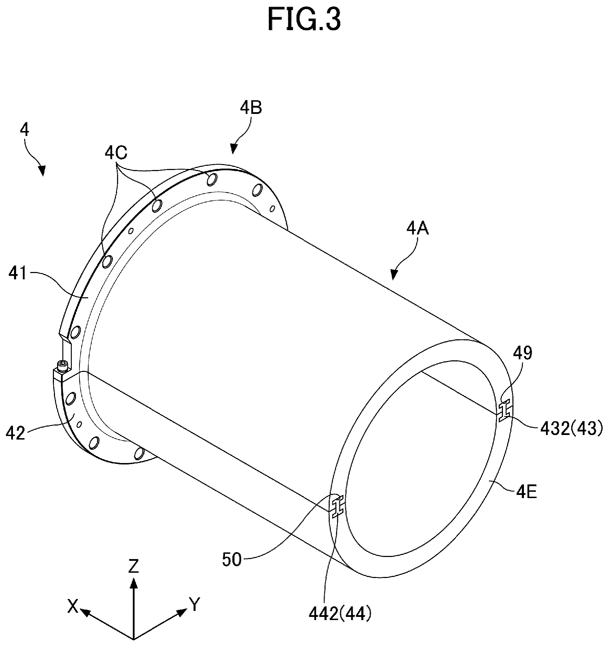

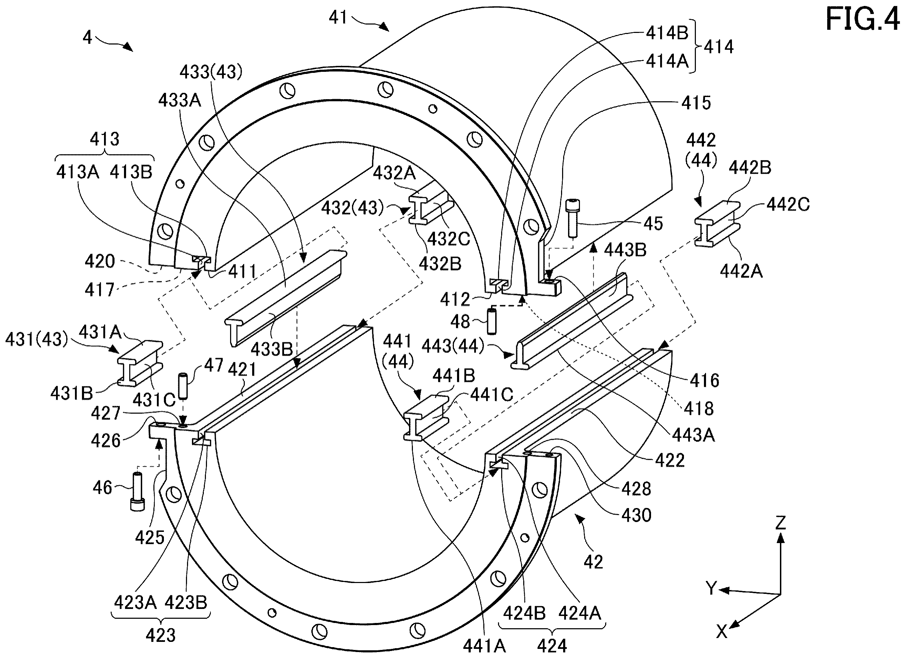

Next, a structure of the liner 4 according to the embodiment will be described with reference to Figs. 2 to 4. Fig. 2 is a perspective diagram of the liner 4 according to the embodiment, when viewed from the stern side. Fig. 3 is a perspective diagram of the liner 4 according to the embodiment, when viewed from the stem side. Fig. 4 is an exploded perspective diagram of the liner 4 according to the embodiment, when viewed from the stern side.

In the following description, an X-direction, a Y-direction, and a Z-direction are perpendicular to each other. The X-direction and the Y-direction are a horizontal direction, and the Z-direction is a vertical direction. The X-direction is a forward/backward direction of the vessel 300, an X-direction positive side is the stern side, and an X-direction negative side is the stem side. The X-direction is also an axial direction of the propeller shaft 3. The Y-direction is a right/left width direction of the vessel 300. In the following, for convenience of description, a Z-direction positive side may also be represented as an upper side, and a Z-direction negative side may also be represented as a lower side.

As illustrated in Figs. 2 and 3, the liner 4 is a cylindrical tubular-shaped member. The liner 4 includes the tubular portion 4A, and the flange portion 4B. The flange portion 4B is provided at the end portion, located at the X-direction positive side (the stern side), of the tubular portion 4A. The flange portion 4B is provided with a plurality of through holes 4C. The plurality of through holes 4C are each formed so as to penetrate the flange portion 4B in the X-direction, and are arranged at substantially regular intervals along a circumferential direction of the ring shape of the flange portion 4B.

An X-direction positive-side end surface of the flange portion 4B is formed so as to be flush with the X-direction positive-side end portion of the tubular portion 4A. That is, the liner 4 has a flat end surface 4D at the X-direction positive side (the stern side). The end surface 4D is connected to the boss portion 5A of the propeller 5 by inserting a plurality of connecting elements such as a plurality of bolts into the plurality of through holes 4C from the X-direction negative side with the end surface 4D being in contact with the stem-side (X-direction negative-side) end surface of the boss portion 5A (see Fig. 1) of the propeller 5, thereby fixing the liner 4 to the propeller 5 so as to be able to rotate integrally with the propeller 5.

The liner 4 also has a flat end surface 4E at the X-direction negative side (the stem side). The end surface 4E is an end surface of the tubular portion 4A.

As illustrated in Figs. 2 to 4, the liner 4 is a split-type tubular body structured by combining, in a circumferential direction of the propeller shaft 3, two components that are split along the axial direction (the X-direction) of the propeller shaft 3. For instance, as shown in Figs. 2 to 4, the liner 4 has a first split body 41, and a second split body 42, which are obtained by dividing (splitting), along the Y-direction, the cylindrical tubular shape into two at a center position in the Z-direction. The first split body 41 is a semicylindrical tubular member that is open at its Z-direction negative side, and the second split body 42 is a semicylindrical tubular member that is open at its Z-direction positive side. The first split body 41 is disposed at the Z-direction positive side, and the second split body 42 is disposed at the Z-direction negative side. The first split body 41 and the second split body 42 correspond to the "two components" forming the split-type tubular body of the liner 4.

As illustrated in Fig. 4, the first split body 41 includes, as Z-direction negative-side end surfaces, a first connecting surface 411, and a second connecting surface 412. The first connecting surface 411 is an end surface located at a Y-direction positive side with respect to a center axis of the liner 4, and the second connecting surface 412 is an end surface located at a Y-direction negative side with respect to the center axis of the liner 4.

The first connecting surface 411 is provided with a first groove 413. The first groove 413 is formed so as to be recessed to the Z-direction positive side from the first connecting surface 411 and so as to extend along the axial direction (the X-direction). The first groove 413 includes an opening portion 413A, and a widened portion 413B. The opening portion 413A is a portion that is open on the first connecting surface 411, and the opening portion 413A includes an opening of the first groove 413. The widened portion 413B is a portion that is located at a Z-direction positive side with respect to the opening portion 413A, and the widened portion 413B includes a bottom surface of the first groove 413. The widened portion 413B is formed so as to widen to both sides in the Y-direction with respect to the opening portion 413A, thereby forming a size in the Y-direction of the widened portion 413B to be greater than that of the opening portion 413A.

The second connecting surface 412 is provided with a second groove 414. The second groove 414 is formed so as to be recessed to the Z-direction positive side from the second connecting surface 412 and so as to extend along the axial direction (the X-direction). The second groove 414 includes an opening portion 414A, and a widened portion 414B. The opening portion 414A is a portion that is open on the second connecting surface 412, and the opening portion 414A includes an opening of the second groove 414. The widened portion 414B is a portion that is located at a Z-direction positive side with respect to the opening portion 414A, and the widened portion 414B includes a bottom surface of the second groove 414. The widened portion 414B is formed so as to widen to both sides in the Y-direction with respect to the opening portion 414A, thereby forming a size in the Y-direction of the widened portion 414B to be greater than that of the opening portion 414A.

The first groove 413 and the second groove 414 of the first split body 41 are formed such that in a cross-sectional shape orthogonal to the axial direction (the X-direction), widths at the bottom surface sides (i.e. widths in the Y-direction of the widened portions 413B and 414B) are greater than widths of the openings (i.e. widths in the Y-direction of the opening portions 413A and 414A) on the first and second connecting surfaces 411 and 412. In the present embodiment, the first groove 413 and the second groove 414 are each formed into a T-shape in a cross section.

As illustrated in Fig. 4, the second split body 42 includes, as Z-direction positive-side end surfaces, a first connecting surface 421, and a second connecting surface 422. The first connecting surface 421 is an end surface located at the Y-direction positive side with respect to the center axis of the liner 4, and the second connecting surface 422 is an end surface located at the Y-direction negative side with respect to the center axis of the liner 4.

The first connecting surface 421 is provided with a first groove 423. The first groove 423 is formed so as to be recessed to the Z-direction negative side from the first connecting surface 421 and so as to extend along the axial direction (the X-direction). The first groove 423 includes an opening portion 423A, and a widened portion 423B. The opening portion 423A is a portion that is open on the first connecting surface 421, and the opening portion 423A includes an opening of the first groove 423. The widened portion 423B is a portion that is located at a Z-direction negative side with respect to the opening portion 423A, and the widened portion 423B includes a bottom surface of the first groove 423. The widened portion 423B is formed so as to widen to both sides in the Y-direction with respect to the opening portion 423A, thereby forming a size in the Y-direction of the widened portion 423B to be greater than that of the opening portion 423A.

The second connecting surface 422 is provided with a second groove 424. The second groove 424 is formed so as to be recessed to the Z-direction negative side from the second connecting surface 422 and so as to extend along the axial direction (the X-direction). The second groove 424 includes an opening portion 424A, and a widened portion 424B. The opening portion 424A is a portion that is open on the second connecting surface 422, and the opening portion 424A includes an opening of the second groove 424. The widened portion 424B is a portion that is located at a Z-direction positive side with respect to the opening portion 424A, and the widened portion 424B includes a bottom surface of the second groove 424. The widened portion 424B is formed so as to widen to both sides in the Y-direction with respect to the opening portion 424A, thereby forming a size in the Y-direction of the widened portion 424B to be greater than that of the opening portion 424A.

The first groove 423 and the second groove 424 of the second split body 42 are formed such that in a cross-sectional shape orthogonal to the axial direction (the X-direction), widths at the bottom surface sides (i.e. widths in the Y-direction of the widened portions 423B and 424B) are greater than widths of the openings (i.e. widths in the Y-direction of the opening portions 423A and 424A) on the first and second connecting surfaces 421 and 422. In the present embodiment, the first groove 423 and the second groove 424 are each formed into a T-shape in a cross section.

When joining the first split body 41 and the second split body 42, the first connecting surface 411 of the first split body 41 and the first connecting surface 421 of the second split body 42 come into contact with each other with the first connecting surfaces 411 and 421 facing each other along a circumferential direction of the tubular portion 4A. Further, since thicknesses of the tubular portions of the first split body 41 and the second split body 42 are formed to be the same dimensions, the first connecting surface 411 of the first split body 41 and the first connecting surface 421 of the second split body 42 are formed into the same shape. Therefore, the first connecting surfaces 411 and 421 come into contact with each other with their outside shapes completely overlapping each other.

Further, the first groove 413 provided on the first connecting surface 411 of the first split body 41 and the first groove 423 provided on the first connecting surface 421 of the second split body 42 are formed such that positions of their opening portions in the Y-direction are the same. With this, as illustrated in Figs. 2 and 3, when the first connecting surface 411 of the first split body 41 and the first connecting surface 421 of the second split body 42 come into contact with each other, their openings on the respective connecting surfaces are aligned with each other, then the two first grooves 413 and 423 can form a first through hole 49 whose axial direction is the axial direction (the X-direction) of the liner 4. In the present embodiment, since the cross-sectional shapes, in the cross section orthogonal to the axial direction (the X-direction), of the first grooves 413 and 423 are both the T-shape, a cross-sectional shape of the first through hole 49 is formed into an H-shape.

Likewise, when joining the first split body 41 and the second split body 42, the second connecting surface 412 of the first split body 41 and the second connecting surface 422 of the second split body 42 come into contact with each other with the second connecting surfaces 412 and 422 facing each other along the circumferential direction of the tubular portion 4A. Further, since thicknesses of the tubular portions of the first split body 41 and the second split body 42 are formed to be the same dimensions, the second connecting surface 412 of the first split body 41 and the second connecting surface 422 of the second split body 42 are formed into the same shape. Therefore, the second connecting surfaces 412 and 422 come into contact with each other with their outside shapes completely overlapping each other.

Further, the second groove 414 provided on the second connecting surface 412 of the first split body 41 and the second groove 424 provided on the second connecting surface 422 of the second split body 42 are formed such that positions of their opening portions in the Y-direction are the same. With this, as illustrated in Figs. 2 and 3, when the second connecting surface 412 of the first split body 41 and the second connecting surface 422 of the second split body 42 come into contact with each other, their openings on the respective connecting surfaces are aligned with each other, then the two second grooves 414 and 424 can form a second through hole 50 whose axial direction is the axial direction (the X-direction) of the liner 4. In the present embodiment, since the cross-sectional shapes, in the cross section orthogonal to the axial direction (the X-direction), of the second grooves 414 and 424 are both the T-shape, a cross-sectional shape of the second through hole 50 is formed into an H-shape.

As illustrated in Fig. 4, the first connecting surface 411 of the first split body 41 is provided with a pin insertion hole 417 that is formed so as to be hollowed to the Z-direction positive side from the connecting surface. On the other hand, the first connecting surface 421 of the second split body 42 is also provided with a pin insertion hole 427 that is formed so as to be hollowed to the Z-direction negative side from the connecting surface. These two pin insertion holes 417 and 427 are formed such that positions of their opening portions in the X-direction and the Y-direction are the same. With this, when the first connecting surface 411 of the first split body 41 and the first connecting surface 421 of the second split body 42 come into contact with each other, the two pin insertion holes 417 and 427 are aligned with each other in a straight line along the Z-direction. A pin 47 is then inserted into these two pin insertion holes 417 and 427. The pin 47 preferably has substantially the same cross-sectional shape as those of the pin insertion holes 417 and 427.

Likewise, the second connecting surface 412 of the first split body 41 is provided with a pin insertion hole 418 that is formed so as to be hollowed to the Z-direction positive side from the connecting surface. On the other hand, the second connecting surface 422 of the second split body 42 is also provided with a pin insertion hole 428 that is formed so as to be hollowed to the Z-direction negative side from the connecting surface. These two pin insertion holes 418 and 428 are formed such that positions of their opening portions in the X-direction and the Y-direction are the same. With this, when the second connecting surface 412 of the first split body 41 and the second connecting surface 422 of the second split body 42 come into contact with each other, the two pin insertion holes 418 and 428 are aligned with each other in a straight line along the Z-direction. A pin 48 is then inserted into these two pin insertion holes 418 and 428. The pin 48 preferably has substantially the same cross-sectional shape as those of the pin insertion holes 418 and 428.

By using the two pins 47 and 48 in this manner, a relative positional relationship between the first split body 41 and the second split body 42 in the X-direction and the Y-direction can be kept constant, thereby surely making the first connecting surfaces 411 and 421 come into contact with each other so as to completely overlap each other. Therefore, since the openings of the first grooves 413 and 423 can also surely be disposed so as to overlap each other, the first through hole 49 can be cleanly formed between the connecting surfaces without shifting in the Y-direction. Likewise, since the openings of the second grooves 414 and 424 can also surely be disposed so as to overlap each other, the second through hole 50 can also be cleanly formed between the connecting surfaces without shifting in the Y-direction.

As illustrated in Fig. 4, a cut-out portion 415 formed so as to be recessed to the Y-direction positive side from an annular outer peripheral surface of the flange portion 4B is formed at a Y-direction negative-side end portion corresponding to the flange portion 4B of the first split body 41. The cut-out portion 415 is formed so that a portion from the second connecting surface 412 to a predetermined height position on the Z-direction positive side, of the portion corresponding to the flange portion 4B of the first split body 41, remains. That is, on the Z-direction negative side of the cut-out portion 415, a protruding portion extending from a center side of the first split body 41 to the Y-direction negative side remains. This protruding portion is provided with a bolt insertion hole 416 that is formed by penetrating the protruding portion in the Z-direction. On the other hand, on the second connecting surface 412 of the second split body 42, a bolt screw hole 430 formed so as to be hollowed to the Z-direction negative side and having a female screw thread on its inner peripheral surface is provided at a position overlapping the bolt insertion hole 416. When joining the first split body 41 and the second split body 42, by inserting a bolt 45 into the bolt insertion hole 416 from the Z-direction positive side and screwing the bolt 45 into the bolt screw hole 430, the first split body 41 and the second split body 42 can be connected and fixed to each other with the second connecting surface 412 of the first split body 41 and the second connecting surface 422 of the second split body 42 being in contact with each other.

Likewise, a cut-out portion 425 formed so as to be recessed to the Y-direction negative side from an annular outer peripheral surface of the flange portion 4B is formed at a Y-direction positive-side end portion corresponding to the flange portion 4B of the second split body 42. The cut-out portion 425 is formed so that a portion from the first connecting surface 421 to a predetermined height position on the Z-direction negative side, of the portion corresponding to the flange portion 4B of the second split body 42, remains. That is, on the Z-direction positive side of the cut-out portion 425, a protruding portion extending from a center side of the second split body 42 to the Y-direction positive side remains. This protruding portion is provided with a bolt insertion hole 426 that is formed by penetrating the protruding portion in the Z-direction. On the other hand, on the first connecting surface 411 of the first split body 41, a bolt screw hole 420 formed so as to be hollowed to the Z-direction negative side and having a female screw thread on its inner peripheral surface is provided at a position overlapping the bolt insertion hole 426. When joining the first split body 41 and the second split body 42, by inserting a bolt 46 into the bolt insertion hole 426 from the Z-direction negative side and screwing the bolt 46 into the bolt screw hole 420, the first split body 41 and the second split body 42 can be connected and fixed to each other with the first connecting surface 411 of the first split body 41 and the first connecting surface 421 of the second split body 42 being in contact with each other.

Further, because of a structure in which the bolt 45 is screwed from the first split body 41 side and the bolt 46 is screwed from the second split body 42 side, the two bolts are screwed in opposite directions to each other in the Z-direction, and also screwed at respective positions that are located equidistant from an axial center position of the liner 4 in the Y-direction, thereby connecting and fixing the first split body 41 and the second split body 42 with a good balance.

As illustrated in Fig. 4, the liner 4 further includes a first bar member group 43, and a second bar member group 44. As shown in Figs. 2 and 3, the first bar member group 43 is an element that is formed so as to extend along the axial direction of the first through hole 49, and that joins the first split body 41 and the second split body 42 by being inserted into the first through hole 49. The second bar member group 44 is an element that is formed so as to extend along the axial direction of the second through hole 50, and that joins the first split body 41 and the second split body 42 by being inserted into the second through hole 50.

As illustrated in Fig. 4, the first bar member group 43 includes a pair of first members 431 and 432, and a second member 433. One first member 431 is put (inserted) into a stern-side (X-direction positive-side) end portion of the first through hole 49. The other first member 432 is put (inserted) into a stem-side (X-direction negative-side) end portion of the first through hole 49. The second member 433 is inserted into the first through hole 49 at a middle position between the stern-side first member 431 and the stem-side first member 432.

The pair of first members 431 and 432 each have the same shape as the first through hole 49 in a cross section. In the present embodiment, since the cross-sectional shape of the first through hole 49 is the H-shape, cross-sectional shapes of the first members 431 and 432 are also the same H-shape as the first through hole 49. That is, the one first member 431 includes a first flat portion 431A having the same shape as that of the widened portion 413B of the first groove 413 of the first split body 41 and extending in the Y-direction, a second flat portion 431B having the same shape as that of the widened portion 423A of the first groove 423 of the second split body 42 and extending in the Y-direction, and a connecting portion 431C having the same shape as those of the opening portion 413A of the first groove 413 and the opening portion 423A of the first groove 423, extending in the Z-direction and connecting the first flat portion 431A and the second flat portion 431B. Likewise, the other first member 432 includes a first flat portion 432A having the same shape as that of the widened portion 413B of the first groove 413 of the first split body 41 and extending in the Y-direction, a second flat portion 432B having the same shape as that of the widened portion 423A of the first groove 423 of the second split body 42 and extending in the Y-direction, and a connecting portion 432C having the same shape as those of the opening portion 413A of the first groove 413 and the opening portion 423A of the first groove 423, extending in the Z-direction and connecting the first flat portion 432A and the second flat portion 432B. Further, outside shapes of the pair of first members 431 and 432 are each formed to be slightly smaller than a shape of an inner peripheral surface of the first through hole 49 so as to be able to be put (inserted) into the first through hole 49.

The second member 433 includes a base end portion 433A having the same shape as that of the first groove 413 of the first split body 41 in a cross section and inserted into the first groove 413, and a tip portion 433B capable of entering an inside (the widened portion 423B) of the first groove 423 of the second split body 42 from the opening (the opening portion 423A) of the first groove 423. In the present embodiment, a cross-sectional shape of the second member 433 is a T-shape.

As illustrated in Fig. 4, the second bar member group 44 includes a pair of first members 441 and 442, and a second member 443. One first member 441 is put (inserted) into a stern-side (X-direction positive-side) end portion of the second through hole 50. The other first member 442 is put (inserted) into a stem-side (X-direction negative-side) end portion of the second through hole 50. The second member 443 is inserted into the second through hole 50 at a middle position between the stern-side first member 441 and the stem-side first member 442.

The pair of first members 441 and 442 each have the same shape as the second through hole 50 in a cross section. In the present embodiment, since the cross-sectional shape of the second through hole 50 is the H-shape, cross-sectional shapes of the first members 441 and 442 are also the same H-shape as the second through hole 50. That is, the one first member 441 includes a first flat portion 441A having the same shape as that of the widened portion 414B of the second groove 414 of the first split body 41 and extending in the Y-direction, a second flat portion 441B having the same shape as that of the widened portion 424B of the second groove 424 of the second split body 42 and extending in the Y-direction, and a connecting portion 441C having the same shape as those of the opening portion 414A of the second groove 414 and the opening portion 424A of the second groove 424, extending in the Z-direction and connecting the first flat portion 441A and the second flat portion 441B. Likewise, the other first member 442 includes a first flat portion 442A having the same shape as that of the widened portion 414B of the second groove 414 of the first split body 41 and extending in the Y-direction, a second flat portion 442B having the same shape as that of the widened portion 424B of the second groove 424 of the second split body 42 and extending in the Y-direction, and a connecting portion 442C having the same shape as those of the opening portion 414A of the second groove 414 and the opening portion 424A of the second groove 424, extending in the Z-direction and connecting the first flat portion 442A and the second flat portion 442B. Further, outside shapes of the pair of first members 441 and 442 are each formed to be slightly smaller than a shape of an inner peripheral surface of the second through hole 50 so as to be able to be put (inserted) into the second through hole 50.

The second member 443 includes a base end portion 443A having the same shape as that of the second groove 424 of the second split body 42 in a cross section and inserted into the second groove 424, and a tip portion 443B capable of entering an inside (the widened portion 414B) of the second groove 414 of the first split body 41 from the opening (the opening portion 414A) of the second groove 414. In the present embodiment, a cross-sectional shape of the second member 443 is a T-shape.

In the present embodiment, the first groove 413 and the second groove 414 each provided at the first split body 41, and the first groove 423 and the second groove 424 each provided at the second split body 42, can be formed by using a well-known machining method, such as, e.g. a wire electrical discharging machining.

The first split body 41, the second split body 42, the first bar member group 43, and a second bar member group 44, which form the liner 4 according to the present embodiment, can be formed by using, for instance, a stainless-based material.

The liner 4 as an example of the tubular member according to the present embodiment includes the split-type tubular body structured by combining, in the circumferential direction of the propeller shaft 3, the two components (the first split body 41 and the second split body 42) that are split along the axial direction of the propeller shaft 3, the pair of grooves (the first groove 413 of the first split body 41 and the first groove 423 of the second split body 42, and the second groove 414 of the first split body 41 and the second groove 424 of the second split body 42) provided, at the first split body 41 and the second split body 42, along the axial direction on the two connecting surfaces (the first connecting surface 411 of the first split body 41 and the first connecting surface 421 of the second split body 42, and the second connecting surface 412 of the first split body 41 and the second connecting surface 422 of the second split body 42) which face each other in the circumferential direction and which are in contact with each other, and forming the through holes (the first through hole 49 and the second through hole 50), with directions of axes of the through holes being the axial direction, by aligning the openings at the connecting surfaces when the two connecting surfaces come into contact, and the bar members (the first bar member group 43 and the second bar member group 44) formed so as to extend along the axial direction and joining the two components by being inserted into the through holes 49 and 50. The cross-sectional shapes, in the cross section orthogonal to the axial direction, of the grooves are formed such that widths at the bottom surface side are greater than widths of the openings at the connecting surfaces.

With this configuration or structure, by merely inserting the bar member into the through hole formed by the pair of grooves when making the connecting surfaces of the first split body 41 and the second split body 42 come into contact with each other, the first split body 41 and the second split body 42 can be firmly joined. Therefore, the tubular member, one example being the liner 4, can be easily installed. Likewise, by merely extracting the bar member, which has been inserted into the through hole, from the through hole, the first split body 41 and the second split body 42 can be easily split. Therefore, the tubular member, one example being the liner 4, can also be easily removed.

Especially when an application example of the tubular member according to the embodiment is the liner 4, replacement work to replace the liner 4 is necessary in the stern tube sealing system 200 in which the liner 4 is installed. In a case of a related-art liner that is molded as a single-piece liner into a cylindrical tubular shape, in order to replace the liner, a procedure for removing the propeller 5 from the propeller shaft 3 once and subsequently pulling out the liner from the propeller shaft 3 is needed, which requires a lot of effort. For such a problem of the related art, in the present embodiment, the liner 4 having the split-type tubular body can be applied. Therefore, by disassembling the liner 4, it is possible to remove the liner 4 from the propeller shaft 3 without removing the propeller 5 from the propeller shaft 3. With this, a load of the replacement work of the liner 4 can be lightened.

Further, the shape of each groove forming the through holes 49 and 50 is formed such that the width at the bottom surface side is greater than the width of the opening. Therefore, the through holes 49 and 50 each have the cross-sectional shape in which a width in the Y-direction is thinnest at a contact portion between the connecting surfaces in the middle of the through hole in the Z-direction, and widths of portions at the Z-direction positive side and the Z-direction negative side with respect to the contact portion are relatively great. Also, the bar members inserted into the through holes 49 and 50 having such a shape each have the similar cross-sectional shape to the through hole. By using such through hole and bar member, an inner surface of each groove forming the through hole can come into contact with side surfaces of the bar member inserted into the groove. It is therefore possible to prevent each groove from coming out from the bar member in the Z-direction. As a result, even in a case where an external force is applied and so on, unintentional or unexpected separation between the first split body 41 and the second split body 42 can be prevented. Further, since it is also possible to prevent each groove from moving with respect to the bar member in the Y-direction, an occurrence of shift between the first split body 41 and the second split body 42 in the Y-direction can be prevented. Accordingly, the first split body 41 and the second split body 42 can be joined more stably.

Furthermore, in the present embodiment, a connecting structure between the first split body 41 and the second split body 42 is a structure in which the bar member extending along the same axial direction is inserted into the through hole provided along the axial direction of the split-type tubular body formed by joining the first split body 41 and the second split body 42. With this structure, since the bar member is interposed throughout the entire region in the axial direction where the connecting surfaces of the first split body 41 and the second split body 42 are in contact with each other, leakage of liquid and/or gas at connecting portions of the split-type tubular body can be prevented. In addition, in a case of this structure, each element or component of the connecting structure can be disposed inside the members forming the tubular shape. Therefore, since each element or component of the connecting structure is not exposed to the outside of the tubular member after connecting the split-type tubular body, deterioration in each element or component can be suppressed, and a long-life tubular member can be realized.

Moreover, the connecting structure between the first split body 41 and the second split body 42 is formed merely by the pair of grooves provided on the connecting surfaces, and the bar member inserted into the through hole formed by these grooves. That is, the connecting structure can be formed merely on the inside of the connecting surfaces within their widths. Therefore, even in the case of the liner 4 having the split-type tubular body, a thickness of the tubular portion 4A can be made as thin as the single-piece liner molded into the cylindrical tubular shape. It is therefore possible to reduce the weight of the tubular member such as the liner 4 having the split-type tubular body. In addition, since there is no need to provide a connecting element such as a bolt engaging portion at an outer peripheral side of the tubular portion 4A, reduction in size of the tubular member can be realized. With the merits of these reduction in weight and in size, it is possible to expand a field of application of the tubular member, and to improve its versatility.

In the liner 4 as an example of the tubular member according to the present embodiment, the first bar member group 43 as an example of the bar member includes the pair of first members 431 and 432 put (inserted) into both ends, in the axial direction, of the through hole 49, and the second member 433 inserted into the through hole 49 at the middle position between the pair of first members 431 and 432 in the state in which the pair of first members 431 and 432 are put (inserted) into both ends of the through hole 49. The pair of first members 431 and 432 each have the same cross-sectional shape, in the cross section orthogonal to the axial direction, as that of the through hole 49. The second member 433 includes the base end portion 433A having the same cross-sectional shape as that of one of the pair of grooves, and the tip portion 433B capable of entering the inside of the other of the pair of grooves from the opening of the other of the pair of grooves.

Likewise, in the liner 4 as an example of the tubular member according to the present embodiment, the second bar member group 44 as an example of the bar member includes the pair of first members 441 and 442 put (inserted) into both ends, in the axial direction, of the through hole 50, and the second member 443 inserted into the through hole 50 at the middle position between the pair of first members 441 and 442 in the state in which the pair of first members 441 and 442 are put (inserted) into both ends of the through hole 50. The pair of first members 441 and 442 each have the same cross-sectional shape, in the cross section orthogonal to the axial direction, as that of the through hole 50. The second member 443 includes the base end portion 443A having the same cross-sectional shape as that of one of the pair of grooves, and the tip portion 443B capable of entering the inside of the other of the pair of grooves from the opening of the other groove.

With these structures, since engaging portions between the through holes 49 and 50 and the bar members can be limited to both end portions of the holes where the stern-side first members 431 and 441 and the stem-side first members 432 and 442 are inserted, assembly work and disassembly work of the liner 4 can be further facilitated, thereby improving work efficiency.

### [Assembling Method and Disassembling Method of Liner 4]

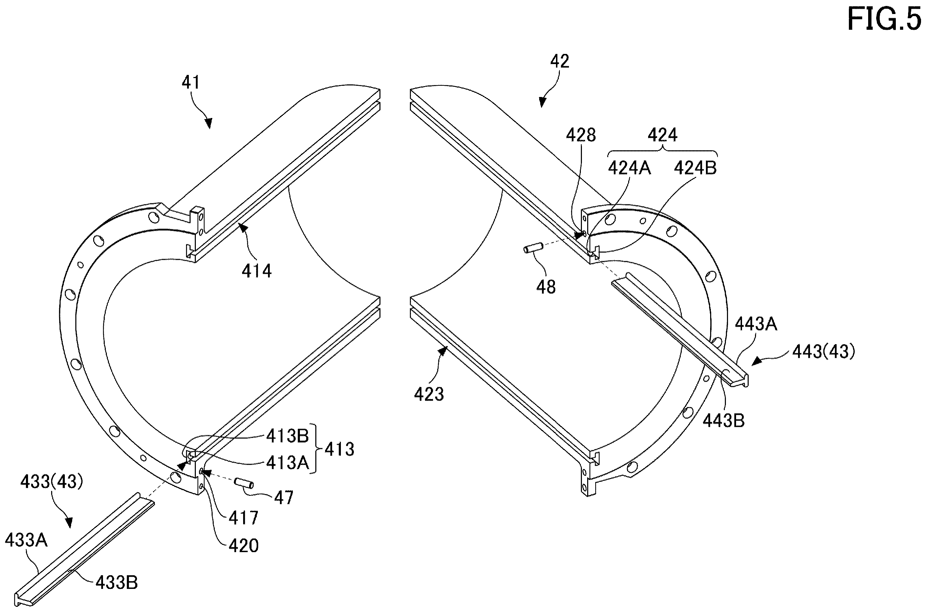

An assembling method of the liner 4 will be described with reference to Figs. 5 to 8.

Fig. 5 is a diagram illustrating a first step of an assembling procedure of the liner 4 according to the embodiment. As illustrated in Fig. 5, in the first step (an insertion step), the base end portion 433A of the second member 433 of the first bar member group 43 is inserted into the first groove 413 of the first split body 41. Likewise, the base end portion 443A of the second member 443 of the second bar member group 44 is inserted into the second groove 424 of the second split body 42. Further, in the first step, sealant is applied to the second groove 414 of the first split body 41 and the first groove 423 of the second split body 42. It is noted that the sealant may be applied to the second members 433 and 443 inserted into the grooves 413 and 424 respectively. Further, the pin 47 is inserted into the pin insertion hole 417 of the first split body 41, and the pin 48 is inserted into the pin insertion hole 428 of the second split body 42.

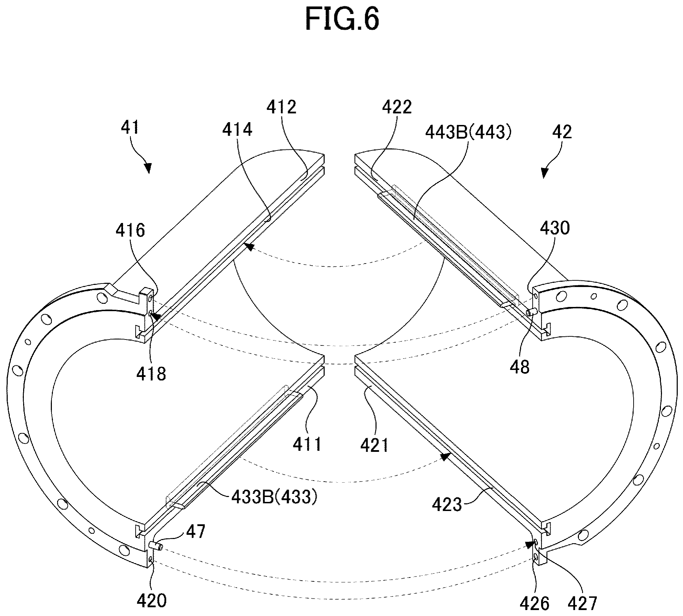

Fig. 6 is a diagram illustrating a second step of the assembling procedure of the liner 4 according to the embodiment. As illustrated in Fig. 6, in the second step (a contact step), by inserting the tip portion 433B, which protrudes from the opening of the first groove 413 of the first split body 41 after the first step, of the second member 433 into the opening of the first groove 423 of the second split body 42, also, by inserting the tip portion 443B, which protrudes from the opening of the second groove 424 of the second split body 42 after the first step, of the second member 443 into the opening of the second groove 414 of the first split body 41, the first connecting surfaces 411 and 421 of the first and second split bodies 41 and 42 forming the split-type tubular body come into contact with each other, also, the second connecting surfaces 412 and 422 of the first and second split bodies 41 and 42 forming the split-type tubular body come into contact with each other. At this time, since the sealant has been applied in the first step, the sealant fills gap portions of the grooves 423 and 414 where the tip portions 433B and 443B of the second member are inserted respectively. Further, in the second step, the pin 47 is inserted into the pin insertion hole 427 of the second split body 42, and the pin 48 is inserted into the pin insertion hole 418 of the first split body 41, then a relative positional relationship between the first split body 41 and the second split body 42. i.e. positioning of the first split body 41 and the second split body 42, is fixed by the two pins 47 and 48.

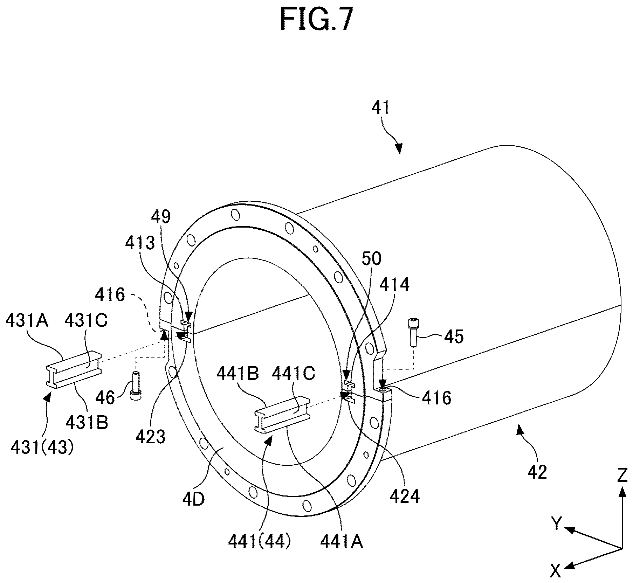

Fig. 7 is a diagram illustrating a third step of the assembling procedure of the liner 4 according to the embodiment. As illustrated in Fig. 7, in the third step (a putting step), one first member 431 of the first bar member group 43 is put (inserted) into the first through hole 49 formed by the first groove 413 of the first split body 41 and the first groove 423 of the second split body 42 after the second step, from a stern-side opening portion, which is located on the end surface 4D side of the liner 4, of opening portions at both ends, in the axial direction, of the first through hole 49. Likewise, one first member 441 of the second bar member group 44 is put (inserted) into the second through hole 50 formed by the second groove 414 of the first split body 41 and the second groove 424 of the second split body 42 after the second step, from a stern-side opening portion, which is located on the end surface 4D side of the liner 4, of opening portions at both ends, in the axial direction, of the second through hole 50. Further, in the third step, the bolt 45 is inserted into the bolt insertion hole 416 of the first split body 41, and is screwed into the bolt screw hole 430 of the second split body 42. Also, the bolt 46 is inserted into the bolt insertion hole 426 of the second split body 42, and is screwed into the bolt screw hole 420 of the first split body 41.

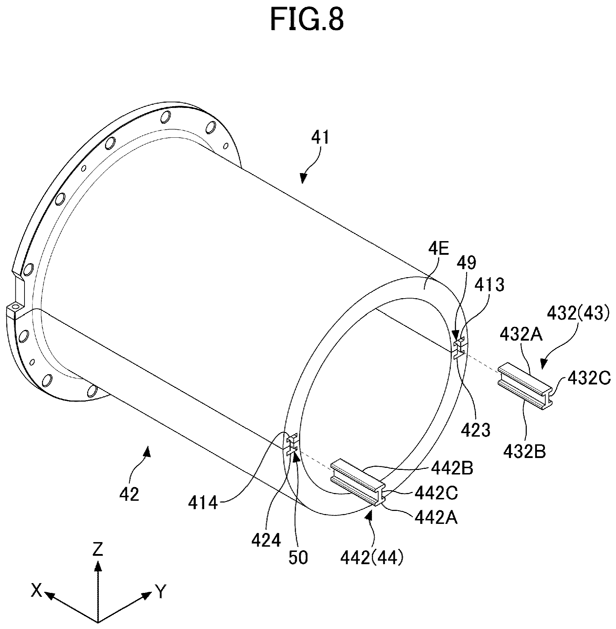

Fig. 8 is a diagram illustrating a fourth step of the assembling procedure of the liner 4 according to the embodiment. As illustrated in Fig. 8, in the fourth step (a putting step), the other first member 432 of the first bar member group 43 is put (inserted) into the first through hole 49 from a stem-side opening portion, which is located on the end surface 4E side of the liner 4, of the opening portions at both ends in the axial direction of the first through hole 49. Likewise, the other first member 442 of the second bar member group 44 is put (inserted) into the second through hole 50 from a stem-side opening portion, which is located on the end surface 4E side of the liner 4, of the opening portions at both ends in the axial direction of the second through hole 50.

A disassembling method of the liner 4 can be performed by an opposite procedure to the assembling method. That is, an extraction step of extracting the stern-side first members 431 and 441 and the stem-side first members 432 and 442 from the through holes 49 and 50, a separation step of separating one of the first and second split bodies 41 and 42, where the base end portions 433A and 443A of the second members 433 and 443 are inserted into the respective grooves, of the split-type tubular body from the other of the first and second split bodies 41 and 42, after the extraction step, and a pulling-out step of pulling out the second members 433 and 443 from the respective grooves 413 and 424, after the separation step, are performed in order.

Here, for instance, there may arise a situation where an ordering party who owns the vessel 300 orders only the liner 4 from a manufacturer, and the manufacturer ships a temporarily assembled liner 4 to the ordering party. In this case, the ordering party disassembles the received temporarily assembled liner 4 once, and assembles the liner 4 around the propeller shaft 3 of the owned vessel 300, to perform the final assembly of the liner 4.

In such a situation, regarding axial lengths of the stern-side first members 431 and 441 and the stem-side first members 432 and 442, it is preferable that in the temporarily assembled state, the stern-side first members 431 and 441 and the stem-side first members 432 and 442 are each formed so as to have a protruding portion whose one end protrudes from the respective opening portions of the through holes 49 and 50, when the stern-side first members 431 and 441 and the stem-side first members 432 and 442 are put (inserted) into the through holes 49 and 50 in the third and fourth steps (the putting steps) of the assembling procedure described with reference to Figs. 7 and 8 in the above assembling method. In this case, in the above disassembling method, in the extraction step, the stern-side first members 431 and 441 and the stem-side first members 432 and 442 are extracted from the through holes 49 and 50 by griping the respective protruding portions and applying an external force to these first members. With this, extraction work of the stern-side first members 431 and 441 and the stem-side first members 432 and 442 can be performed more simply and easily, thereby improving efficiency in the disassembly work.

Further, in such a situation, when performing the final assembly of the liner 4, it is preferable that after the stern-side first members 431 and 441 and the stem-side first members 432 and 442 are put (inserted) into the through holes 49 and 50 in the third and fourth steps (the putting steps) of the assembling procedure described with reference to Figs. 7 and 8, a machining process (a cutting step) of cutting the protruding portions of the respective members and making opening portion-side end surfaces of the stern-side first members 431 and 441 and the stem-side first members 432 and 442 flush with the respective end surfaces (i.e. the stern-side end surface 4D and the stem-side end surface 4E of the liner 4), in the axial direction, of the split-type tubular body be performed after the fourth step. With this, the first bar member group 43 and the second bar member group 44 are shaped so that no part of these first and second bar member groups 43 and 44 protrudes from the respective end surfaces 4D and 4E after the final assembly. Therefore, breakage or ejection of the first bar member group 43 and the second bar member group 44 due to the application of the external force and so on can be prevented, and a long-life liner 4 can be realized.

### [First Modification]

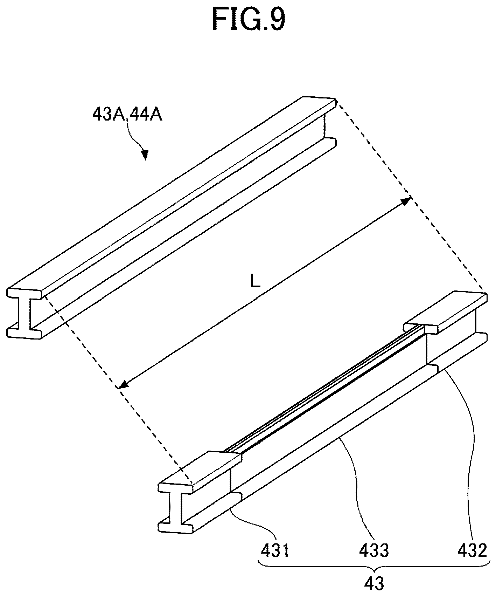

Fig. 9 is a diagram illustrating an example of bar members 43A and 44A according to a first modification. In the above embodiment, the structure in which each of the first bar member group 43 and the second bar member group 44 is divided into the three members along the respective axial directions of the through holes 49 and 50 is exemplified. However, these first and second bar member groups 43 and 44 may be replaced with the single bar members 43A and 44A along the axial directions.

In this case, as illustrated in Fig. 9, a cross-sectional shape of each of the bar members 43A and 44A becomes an H-shape at any position in the axial direction. Further, it is preferable to form each of the bar members 43A and 44A so that an axial lengths L of each of the bar members 43A and 44A is the same as a total length of the members of the above embodiment, for instance, as a total L of lengths of one first member 431, the other first member 432, and the second member 433 of the first bar member group 43 as shown in Fig. 9. By inserting the bar members 43A and 44A into the through holes 49 and 50 respectively, the first split body 41 and the second split body 42 are connected.

### [Second Modification]

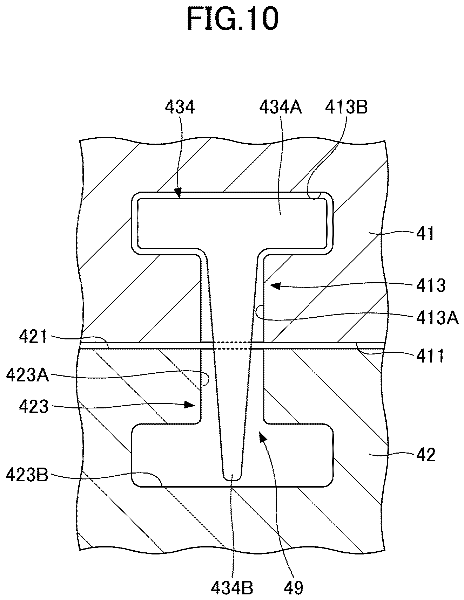

Fig. 10 is a diagram illustrating an example of a second member 434 of a bar member group according to a second modification. In the above embodiment, for instance, as shown in Fig. 4, the structure in which the cross-sectional shape of each of the tip portions 433B and 443B of the second members 433 and 443 is formed so as to have a same width in their extending directions along the Z-direction is exemplified. However, as long as the tip portions 433B and 443B each have a shape that can be inserted into the inside of the other groove, the shape of each of the tip portions 433B and 443B is not limited to the above shape.

For instance, like the second member 434 shown in Fig. 10, a tapered shape in which a width of a tip portion 434B is smaller toward a tip side may also be possible. Here, a shape of a base end portion 434A of the second member 434 is the same as those of the base end portions 433A and 443A of the above embodiment.

### [Third Modification]

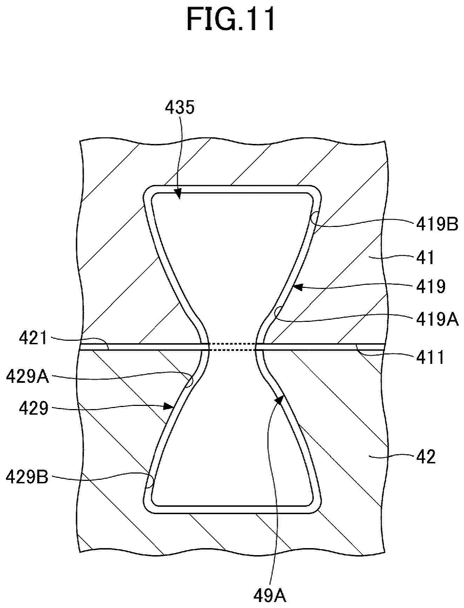

Fig. 11 is a diagram illustrating an example of cross-sectional shapes of a through hole 49A and a bar member 435 according to a third modification. In the above embodiment, the structure in which the cross-sectional shapes of the through holes 49 and 50, and the stern-side first members 431 and 441 and the stem-side first members 432 and 442 of the bar member groups 43 and 44 are all the H-shape is exemplified. However, other cross-sectional shapes may also be possible. That is, it is essential that each groove be formed such that in the cross-sectional shape orthogonal to the axial direction of the liner 4, a width at the bottom surface side is greater than a width of the opening on the connecting surface. For instance, like each of a groove 419 of the first split body 41 and a groove 429 of the second split body 42 shown in Fig. 11, a shape in which a width in the Y-direction is gradually increased toward the bottom side of the groove with respect to the opening of the groove may also be possible. In this case, a cross-sectional shape of the through hole 49A formed by the two grooves 419 and 429 becomes an hourglass shape in which widths of the opening portions of the connecting surfaces 411 and 421 are narrowest, and are gradually wider along an up-and-down direction. In this case, a cross-sectional shape of the bar member 435 also becomes the same hourglass shape as the through hole 49A.

Although the present embodiment has been described with reference to the specific examples, the present disclosures are not limited to these specific examples. These specific examples, with appropriate design changes made by those skilled in the art, are also included in the scope of the present disclosures, as long as they have features of the present disclosures. Each element or component, its arrangement, its condition, its shape, etc. included in the above-described specific examples are not limited to those exemplified in the specific examples, and could be appropriately changed. Each element or component included in the above-described specific examples could be combined as necessary, as long as no technical contradictions arise.

In the above embodiment, as an example of the tubular member according to the embodiment, the liner 4 installed around the propeller shaft 3 in the stern tube sealing system 200 is exemplified. However, as long as the tubular member has the same structure as that of the liner 4, the tubular member can be applied to other elements than the liner 4.

Further, the liner 4 exemplified as an example of the tubular member in the embodiment is exemplified as having the structure in which the tubular shape having the first split body 41 and the second split body 42 is split into two. However, as long as the tubular member has the structure having the split-type tubular body structured by combining, in the circumferential direction of the tubular shape, the plurality of components that are split along the axial direction of the tubular member, a structure in which an integral tubular body is formed by connecting or combining three or more split bodies could also be employed.

In addition, the liner 4 exemplified as an example of the tubular member in the embodiment is exemplified as having the structure in which the first bar member group 43 inserted into the through hole 49 includes one first member 431, the other first member 432, and the second member 433. Further, this structure is exemplified as having the structure in which the one first member 431 is put (inserted) into the stern-side end portion of the through hole 49, the other first member 432 is put (inserted) into the stem-side end portion of the through hole 49, and the second member 433 is inserted into the through hole 49 at the middle position between the pair of first members 431 and 432. Unlike this structure, a structure in which the stern-side first member 431 is not put (inserted) into the through hole 49 may be employed. That is, a structure in which the second member 433 is inserted into the through hole 49 at the middle position of the through hole 49, and the other first member 432 is put (inserted) into the stem-side end portion of the through hole 49 may be possible. In other words, the first bar member group 43 may have a structure formed by the two members of the other first member 432 put (inserted) into the stem-side end portion of the through hole 49, and the second member 433 inserted into the through hole 49 at the middle position of the through hole 49. In a case of this structure, the stern-side end portion of the through hole 49 is hollow, which is in a state in which the first split body 41 and the second split body 42 are not connected by the first bar member group 43. However, in the case of this structure as well, since the first split body 41 and the second split body 42 are bolt-connected at the stern-side flange portion 4B with the two bolts 45 and 46, the split bodies 41 and 42 can be sufficiently firmly connected together also at the stern-side portion of the liner 4.

Likewise, the liner 4 exemplified as an example of the tubular member in the embodiment is exemplified as having the structure in which the second bar member group 44 inserted into the through hole 50 includes one first member 441, the other first member 442, and the second member 443. Further, this structure is exemplified as having the structure in which the one first member 441 is put (inserted) into the stern-side end portion of the through hole 50, the other first member 442 is put (inserted) into the stem-side end portion of the through hole 50, and the second member 443 is inserted into the through hole 50 at the middle position between the pair of first members 441 and 442. Unlike this structure, a structure in which the stern-side first member 441 is not inserted into the through hole 50 may be employed. That is, a structure in which the second member 443 is inserted into the through hole 50 at the middle position of the through hole 50, and the other first member 442 is put (inserted) into the stem-side end portion of the through hole 50 may be possible. In other words, the second bar member group 44 may have a structure formed by the two members of the other first member 442 put (inserted) into the stem-side end portion of the through hole 50, and the second member 443 inserted into the through hole 50 at the middle position of the through hole 50. In a case of this structure, the stern-side end portion of the through hole 50 is hollow, which is in a state in which the first split body 41 and the second split body 42 are not connected by the second bar member group 44. However, in the case of this structure as well, since the first split body 41 and the second split body 42 are bolt-connected at the stern-side flange portion 4B with the two bolts 45 and 46, the split bodies 41 and 42 can be sufficiently firmly connected together also at the stern-side portion of the liner 4.

Further, the liner 4 used in the stern tube sealing system 200 may have a stern-side (X-direction positive-side) inner diameter portion formed into a tapered shape. In such a case, there is a need to also cut portions, which are exposed from the through holes 49 and 50, of the first members 431 and 441 put (inserted) into the stern-side end portions of the through holes 49 and 50 into the same tapered shape as that of the inner diameter portion. This requires a complex process in the assembling step of the liner 4. Therefore, in the case of the structure in which the first members 431 and 441 are not inserted into the stern-side end portions of the through holes 49 and 50, there is no need to perform machining to make the portions, exposed from the through holes 49 and 50, of the first members 431 and 441 flush with the stern-side (X-direction positive-side) end surface 4D of the liner 4. A problem of requiring the complex work in the assembling step of the liner 4 can thus be avoided.

Here, in the case of the structure in which the first members 431 and 441 are not inserted, as a process, sealant (liquid packing) may be applied to the first connecting surfaces 411 and 421 and the second connecting surfaces 412 and 422 of the first and second split bodies 41 and 42, then the liner 4 is assembled, or a gasket (seat packing) may be sandwiched between the flange surface (the stern-side end surface 4D) of the liner 4 and the boss portion 5A of the propeller 5. With these processes, even in the structure having no first members 431 and 441 on the flange portion 4B side (the stern side), as in the above embodiment, leakage of liquid and/or gas at the connecting portions of the split-type tubular body can be prevented.

Moreover, in the tubular member other than the liner 4 as well, in a case of a structure in which the split bodies 41 and 42 are connected at each one side of the respective both ends of the through holes 49 and 50 by components such as the bolt-connection other than the bar members, a structure in which the first members are not put (inserted) into the respective one end portion sides of the through holes 49 and 50 may be employed. As in the above embodiment, these structures can bring about the effect of easily installing and removing the tubular member, one example being the liner 4, realizing a long-life tubular member, further facilitating the assembly work and the disassembly work of the tubular member, and thus improving work efficiency, etc.

### DESCRIPTION OF REFERENCE SYMBOLS

- 4: liner (tubular member)
- 41: first split body (split-type tubular body)
- 411: first connecting surface
- 412: second connecting surface
- 413: first groove
- 414: second groove
- 42: second split body (split-type tubular body)
- 421: first connecting surface
- 422: second connecting surface
- 423: first groove
- 424: second groove
- 43: first bar member group (bar member)
- 44: second bar member group (bar member)
- 431, 432, 441, 442: first member
- 433, 443, 434: second member
- 435: bar member
- 49: first through hole
- 50: second through hole
- 1: stern tube
- 3: propeller shaft
- 5: propeller
- 10: stern tube sealing device
- 200: stern tube sealing system
- 300: vessel

## Claims

1. A tubular member comprising:
a split-type tubular body structured by combining, in a circumferential direction, a plurality of components that are split along an axial direction;
a pair of grooves provided, at two adjacent components of the plurality of components, along the axial direction on two connecting surfaces which face each other in the circumferential direction and which are in contact with each other, and forming a through hole by aligning openings thereof at the connecting surfaces when the two connecting surfaces come into contact, a direction of an axis of the through hole being the axial direction; and
at least one bar member formed so as to extend along the axial direction and joining the two components by being inserted into the through hole,
wherein cross-sectional shapes, in a cross section orthogonal to the axial direction, of the grooves are formed such that widths at a bottom surface side are greater than widths of the openings at the connecting surfaces.

2. The tubular member as claimed in claim 1, wherein
the at least one bar member includes:
a first member put into at least one of both ends, in the axial direction, of the through hole; and
a second member inserted into the through hole at a middle position between a pair of said first members in a state in which the pair of first members are put into both ends of the through hole,
the first member has a same cross-sectional shape, in the cross section, as that of the through hole, and
the second member includes a base end portion having a same cross-sectional shape, in the cross section, as that of one of the pair of grooves, and a tip portion capable of entering an inside of the other of the pair of grooves from the opening of the other groove.

3. The tubular member as claimed in claim 1 or 2, wherein
a cross-sectional shape, in the cross section, of the groove is formed into a T-shape, and
a cross-sectional shape, in the cross section, of the through hole formed by combining the pair of grooves is formed into an H-shape.

4. An assembling method of a tubular member, the tubular member including:
a split-type tubular body structured by combining, in a circumferential direction, a plurality of components that are split along an axial direction;
a pair of grooves provided, at adjacent two components of the plurality of components, along the axial direction on two connecting surfaces which face each other in the circumferential direction and which are in contact with each other, and forming a through hole by aligning openings thereof at the connecting surfaces when the two connecting surfaces come into contact, a direction of an axis of the through hole being the axial direction; and
at least one bar member formed so as to extend along the axial direction and joining the two components by being inserted into the through hole,
wherein cross-sectional shapes, in a cross section orthogonal to the axial direction, of the grooves are formed such that widths at a bottom surface side are greater than widths of the openings at the connecting surfaces, and
wherein the at least one bar member includes:
a first member put into at least one of both ends, in the axial direction, of the through hole; and
a second member inserted into the through hole at a middle position between a pair of said first members in a state in which the pair of first members are put into both ends of the through hole,
the first member has a same cross-sectional shape, in the cross section, as that of the through hole, and
the second member includes a base end portion having a same cross-sectional shape, in the cross section, as that of one of the pair of grooves, and a tip portion capable of entering an inside of the other of the pair of grooves from the opening of the other groove,
the assembling method comprising:
an insertion step of inserting the base end portion of the second member into the one groove of the pair of grooves;
a contact step of making the respective connecting surfaces of the two components of the split-type tubular body come into contact with each other by inserting the tip portion, which protrudes from the opening of the one groove after the insertion step, of the second member into the opening of the other groove of the pair of grooves; and
a putting step of putting the first member into the through hole formed by the pair of grooves after the contact step, from at least one of opening portions at both ends, in the axial direction, of the through hole.

5. The assembling method of the tubular member as claimed in claim 4, wherein
an axial length of the first member is formed so that the first member includes a protruding portion whose one end protrudes from the opening portion of the through hole when put into the through hole in the putting step, and
the assembling method further comprises a cutting step of making an opening portion-side end surface of the first member flush with an axial end surface of the split-type tubular body by cutting the protruding portion, after putting the first member into the through hole in the putting step.

6. A disassembling method of a tubular member, the tubular member including:
a split-type tubular body structured by combining, in a circumferential direction, a plurality of components that are split along an axial direction;
a pair of grooves provided, at adjacent two components of the plurality of components, along the axial direction on two connecting surfaces which face each other in the circumferential direction and which are in contact with each other, and forming a through hole by aligning openings thereof at the connecting surfaces when the two connecting surfaces come into contact, a direction of an axis of the through hole being the axial direction; and
at least one bar member formed so as to extend along the axial direction and joining the two components by being inserted into the through hole,
wherein cross-sectional shapes, in a cross section orthogonal to the axial direction, of the grooves are formed such that widths at a bottom surface side are greater than widths of the openings at the connecting surfaces, and
wherein the at least one bar member includes:
a first member put into at least one of both ends, in the axial direction, of the through hole; and
a second member inserted into the through hole at a middle position between a pair of said first members in a state in which the pair of first members are put into both ends of the through hole,
the first member has a same cross-sectional shape, in the cross section, as that of the through hole, and
the second member includes a base end portion having a same cross-sectional shape, in the cross section, as that of one of the pair of grooves, and a tip portion capable of entering an inside of the other of the pair of grooves from the opening of the other groove,
the disassembling method comprising:
an extraction step of extracting the first member from the through hole;
a separation step of separating one of the two components, where the base end portion of the second member is inserted into the groove, of the split-type tubular body from the other of the two components, after the extraction step; and
a pulling-out step of pulling out the second member from the groove, after the separation step.

7. The disassembling method of the tubular member as claimed in claim 6, wherein
an axial length of the first member is formed so that the first member includes a protruding portion whose one end protrudes from an opening portion of the through hole, in a state in which the first member is put into the through hole with the second member being inserted at the middle of the through hole before the extraction step, and
in the extraction step, the first member is extracted from the through hole by applying an external force to the first member by griping the protruding portion.

8. A liner having a cylindrical tubular shape and installed so as to be fitted onto a periphery of a propeller shaft in a stern tube sealing system provided with a stern tube sealing device that prevents water from entering a vessel by supplying air to the periphery of the propeller shaft of the vessel, the liner comprising:
a split-type tubular body structured by combining, in a circumferential direction of a propeller shaft, a plurality of components that are split along an axial direction of the propeller shaft;
a pair of grooves provided, at adjacent two components of the plurality of components, along the axial direction on two connecting surfaces which face each other in the circumferential direction and which are in contact with each other, and forming a through hole by aligning openings thereof at the connecting surfaces when the two connecting surfaces come into contact, a direction of an axis of the through hole being the axial direction; and
at least one bar member formed so as to extend along the axial direction and joining the two components by being inserted into the through hole,
wherein cross-sectional shapes, in a cross section orthogonal to the axial direction, of the grooves are formed such that widths at a bottom surface side are greater than widths of the openings at the connecting surfaces.

9. The liner as claimed in claim 8, wherein the at least one bar member includes:
a first member put into at least a stem-side end of both ends, in the axial direction, of the through hole; and
a second member inserted into the through hole at a middle position between a pair of said first members in a state in which the pair of first members are put into both ends of the through hole,
the first member has a same cross-sectional shape, in the cross section, as that of the through hole, and
the second member includes a base end portion having a same cross-sectional shape, in the cross section, as that of one of the pair of grooves, and a tip portion capable of entering an inside of the other of the pair of grooves from the opening of the other groove.

10. A stern tube sealing system comprising:
a stern tube;
a propeller shaft rotatably supported by the stern tube;
a propeller fixed to a stern-side tip of the propeller shaft;
the liner recited in claim 8 or 9; and
a stern tube sealing device installed at an outer peripheral side of the liner and preventing water from entering a vessel by supplying air to a periphery of the propeller shaft.

11. A vessel comprising:
the stern tube sealing device recited in claim 10.
